(19) Europäisches Patentamt / European Patent Office / Office européen des brevets

(11) **EP 2 816 529 B1**

(12) **EUROPEAN PATENT SPECIFICATION**

(45) Date of publication and mention
of the grant of the patent:
**03.08.2016 Bulletin 2016/31**

(51) Int Cl.:
***G06T 7/00*** *(2006.01)*        *G06K 9/00* *(2006.01)*
***G06K 9/62*** *(2006.01)*

(21) Application number: **14169591.6**

(22) Date of filing: **23.05.2014**

(54) **Method and device for automatic water area segmentation in SAR images of a complex terrain**

Verfahren und Vorrichtung zur automatischen Segmentierung von Wassergebieten in SAR-Bildern eines komplexen Geländes

Procédé et dispositif de segmentation automatique des zones d'eau dans images SAR d'un terrain complexe

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2013 CN 201310690431**

(43) Date of publication of application:
**24.12.2014 Bulletin 2014/52**

(73) Proprietor: **Institute of Electronics, Chinese
Academy of
Sciences
Beijing 100190 (CN)**

(72) Inventors:
• **Deng, Yunkai**
  **100190 Beijing (CN)**
• **Li, Ning**
  **100190 Beijing (CN)**
• **Wang, Yu**
  **100190 Beijing (CN)**
• **Wang, Wei**
  **100190 Beijing (CN)**
• **Zhang, Zhimin**
  **100190 Beijing (CN)**
• **Wang, Chunle**
  **100190 Beijing (CN)**
• **Yu, Weidong**
  **100190 Beijing (CN)**
• **Zhao, Fengjun**
  **100190 Beijing (CN)**
• **Ni, Jiang**
  **100190 Beijing (CN)**

(74) Representative: **Gulde & Partner
Patent- und Rechtsanwaltskanzlei mbB
Wallstraße 58/59
10179 Berlin (DE)**

(56) References cited:
**CN-A- 102 609 709**

• **ANDREAS NIEDERMEIER ET AL: "Topography and morphodynamics in the German Bight using SAR and optical remote sensing data", OCEAN DYNAMICS ; THEORETICAL, COMPUTATIONAL AND OBSERVATIONAL OCEANOGRAPHY, SPRINGER, BERLIN, DE, vol. 55, no. 2, November 2005 (2005-11), pages 100-109, XP019356968, ISSN: 1616-7228, DOI: 10.1007/S10236-005-0114-2**
• **WANG L ET AL: "Active contours driven by local Gaussian distribution fitting energy", SIGNAL PROCESSING, ELSEVIER SCIENCE PUBLISHERS B.V. AMSTERDAM, NL, vol. 89, no. 12, December 2009 (2009-12), pages 2435-2447, XP026392605, ISSN: 0165-1684 [retrieved on 2009-03-21]**
• **MARGARIDA SILVEIRA ET AL: "Water/land segmentation in SAR images using level sets", 15TH IEEE INTERNATIONAL CONFERENCE ON IMAGE PROCESSING : ICIP 2008 ; SAN DIEGO, CALIFORNIA, USA, 12 - 15 OCTOBER 2008, IEEE, PISCATAWAY, NJ, USA, 12 October 2008 (2008-10-12), pages 1896-1899, XP031374397, ISBN: 978-1-4244-1765-0**

EP 2 816 529 B1

• BHANU B ET AL: "ANALYSIS OF TERRAIN USING MULTISPECTRAL IMAGES", PATTERN RECOGNITION, ELSEVIER, GB, vol. 30, no. 2, February 1997 (1997-02), pages 197-215, XP000682893, ISSN: 0031-3203, DOI: 10.1016/S0031-3203(95)00152-2

**Description**

**TECHNICAL FIELD**

The present disclosure relates to image processing technologies applied in Synthetic Aperture Radar (SAR), and more particularly to an automatic water area segmentation method and device for an SAR image of a complex terrain.

**BACKGROUND**

Continuous monitoring on a large area of water concerns the equilibrium of water and land and the protection for the environment and is particularly of great significance to the prevention and forecasting of natural disasters such as earthquake or flood. With an all-time all-weather long-distance imaging capability for an area to be monitored, an SAR is used to monitor a water area and calculate the area of the water area, and by monitoring the same water area at different times, an SAR may acquire changes in the area of the water area. Extracting the area of a water area accurately and efficiently is quite difficult.

Some researches have been made on the segmentation of a water area from an SAR image and the detection on the change in the area of the water area. However, the majority of existing methods are based on an assumed flat terrain. In the case of a complex terrain, due to the influence of surface features such as mountains, shadows having an echo amplitude substantially equivalent to the water area are generated in an SAR image, which directly results in a significant influence on the segmentation of existing common algorithms such as threshold segmentation or level set segmentation algorithms, or even failures.

In conclusion, how to achieve the automatic segmentation of a water area from the SAR image of a complex terrain is still a problem to be solved.

Andreas Niedermeier et. al.: "Topography and morphodynamics in the German Bight using SAR and optical remote sensing data" (Ocean Dynamics; Theoretical, Computational and Observational Oceanography, Springer, Berlin, DE, Vol. 55, No. 2, November 2005) gives an overview of sensors and algorithms for waterline determination as well as several applications. Both optical and SAR images are considered. Applications include morphodynamic monitoring studies and DEM generation. An algorithm for waterline extraction from SAR images was developed. It uses wavelet edge detection (decomposition and thresholding) as well as several post processing steps for the derivation of a continuous waterline from a single SAR image.

Wang L. et. al.: "Active contours driven by local Gaussian distribution fitting energy" (Signal Processing, Elsevier Science Publishers B. V. Amsterdam, NL, Vol. 89, No. 12, December 2009) presents a new region-based active contour model in a variational level set formulation for image segmentation. In our model, the local image intensities are described by Gaussian distributions with different means and variances. We define a local Gaussian distribution fitting energy with a level set function and local means and variances as variables. The energy minimization is achieved by an interleaved level set evolution and estimation of local intensity means and variances in an iterative process. The means and variances of local intensities are considered as spatially varying functions to handle intensity inhomogeneities and noise of spatially varying strength (e.g. multiplicative noise). In addition, our model is able to distinguish regions with similar intensity means but different variances. This is demonstrated by applying our method on noisy and texture images in which the texture patterns of different regions can be distinguished from the local intensity variance. Comparative experiments show the advantages of the proposed method.

**SUMMARY**

In view of the above, the present disclosure provides an automatic water area segmentation method and device for the SAR image of a complex terrain, which are capable of achieving the automatic segmentation of a water area from an SAR image of a complex terrain.

The technical solution of the present disclosure is implemented as follows:

an automatic water area segmentation method for a Synthetic Aperture Radar (SAR) image of a complex terrain includes:

an original SAR image is preprocessed to obtain a preprocessed SAR image;

a first water area segmentation is performed on the preprocessed SAR image using a threshold segmentation method to obtain a first water area range;

a Region Of Interest (ROI) is extracted from the first water area range; and

a second water area segmentation is performed on the ROI using a Local Gauss Distribution Fitting Active Contour Model (LGDF ACM) algorithm to obtain a second water area range.

Preferably, the step of preprocessing an original SAR image to obtain a preprocessed SAR image comprises:

acquiring a Control Point (CP) of the original SAR image and a CP of a reference SAR image using an automatic CP determination method;

registering the original SAR image based on the CP of the original SAR image and the CP of the reference SAR image to obtain a registered SAR image;

filtering the registered SAR image using an enhanced Lee filtering algorithm to suppress speckle noises to obtain a filtered SAR image; and

linearly stretching pixels of the filtered SAR image to obtain the preprocessed SAR image.

Preferably, the step of performing a first water area segmentation on the preprocessed SAR image using a threshold segmentation method to obtain a first water area range comprises:

dividing the preprocessed SAR image into N sub-images, wherein N is an integer greater than 1;

for each sub-image, selecting an optimal threshold in the sub-image using a classical Ostu algorithm and performing a first water area segmentation on the sub-image to obtain a first water area sub-range corresponding to the sub-image; and

splicing N first water area sub-ranges to obtain the first water area range.

Preferably, the step of extracting an ROI from the first water area range comprises:

processing the first water area range using opening and closing operations in a morphology algorithm to decrease noises in the first water area range and isolate different connected water areas;
selecting a water area having the largest connected area in the first water area range resulted from the opening and closing operations, and calculating a contrast ratio of the water area having the largest connected area based on the following formula:

$$ C_{\max} = MAX(C_i = \frac{u_B - u_i}{\sigma_B}) $$

where $C_{\max}$ represents the contrast ratio of the water area having the largest connected area, $C_i$ represents a contrast ratio of the ith connected water area, $u_i$ represents a mean intensity value of the ith connected water area, $u_B$ and $\sigma_B$ represent a mean intensity value and a standard deviation value of a background, and $MAX(\ )$ represents an operation of choosing the maximum value;
determining an area threshold based on the area of the water area having the largest connected area, and determining a contrast ratio range based on the contrast ratio of the water area having the largest connected area; and
for each connected water area in the first water area range resulted from the opening and closing operations, determining a connected water area to be the ROI when the connected water area has an area greater than the area threshold and a contrast ratio within the contrast ratio range.

Preferably, the method may further include:

calculating a variation of the SAR image based on the second water area ranges of a plurality of SAR images in the time domain.

An automatic water area segmentation device for a Synthetic Aperture Radar (SAR) image of a complex terrain, comprising:

a preprocessing unit configured to preprocess an original SAR image to obtain a preprocessed SAR image;

a first segmenting unit configured to perform a first water area segmentation on the preprocessed SAR image using a threshold segmentation method to obtain a first water area range;

an extracting unit configured to extract a Region Of Interest (ROI) in the first water area range; and

a second segmenting unit configured to perform a second water area segmentation on the ROI using a Local Gauss Distribution Fitting Active Contour Model (LGDF ACM) algorithm to obtain a second water area range.

Preferably, the preprocessing unit may include:

a first determining sub-unit configured to acquire a Control Point (CP) of the original SAR image and a CP of a reference SAR image using an automatic CP determination method;

a registering sub-unit configured to register the original SAR image based on the CP of the original SAR image and the CP of the reference SAR image to obtain a registered SAR image;

a filtering sub-unit configured to filter the registered SAR image using an enhanced Lee filtering algorithm to suppress speckle noises to obtain a filtered SAR image; and

a stretching sub-unit configured to linearly stretch pixels of the filtered SAR image to obtain the preprocessed SAR image.

Preferably, the first segmentation unit comprises:

a dividing sub-unit configured to divide the preprocessed SAR image into N sub-images, wherein N is an integer greater than 1;

a segmenting sub-unit configured to select, for each sub-image, an optimal threshold in the sub-image using a classical Ostu algorithm, and perform a first water area segmentation on the sub-image to obtain a first water area sub-range corresponding to the sub-image; and

a splicing sub-unit configured to splice N first water area sub-ranges to obtain the first water area range.

Preferably, the extracting unit comprises:

a processing sub-unit configured to process the first water area range using opening and closing operations in a morphology algorithm to decrease noises in the first water area range and isolate different connected water areas;

a calculating sub-unit configured to select a water area having the largest connected area in the first water area range resulted from the opening and closing operations, and calculate a contrast ratio of the water area having the largest connected area based on the following formula:

$$C_{\max} = MAX\,(C_i = \frac{u_B - u_i}{\sigma_B})$$

where $C_{\max}$ represents the contrast ratio of the water area having the largest connected area, $C_i$ represents a contrast ratio of the ith connected water area, $u_i$ represents a mean intensity value of the ith connected water area, $u_B$ and $\sigma_B$ represent a mean intensity value and a standard deviation value of a background, and $MAX(\ )$ represents an operation of choosing the maximum value;

a second determining sub-unit configured to determine an area threshold based on the area of the water area having the largest connected area and determine a contrast ratio range based on the contrast ratio of the water area having the largest connected area; and

a third determining sub-unit configured to determine, for each connected water area in the first water area range resulted from the opening and closing operations, a connected water area to be the ROI when the connected water area has an area greater than the area threshold and a contrast ratio within the contrast ratio range.

Preferably, the device may further include:

a calculating unit configured to calculate a variation of the SAR image based on the second water area ranges of a plurality of SAR images in the time domain.

According to the technical solution of the present disclosure above, an original SAR image is preprocessed to obtain a preprocessed SAR image; a first water area segmentation is performed on the preprocessed SAR image using a threshold segmentation method to obtain a first water area range; an ROI is extracted from the first water area range; and a second water area segmentation is performed on the ROI using the LGDF ACM algorithm to obtain a second water area range. In this way, by performing a water area segmentation twice on an SAR image, an accurate water area range can be obtained, and the accurate variation of the water area with the time can be further determined totally free from the influence of a terrain or topography.

## BRIEF DESCRIPTION OF THE DRAWINGS

Fig. 1 is a schematic diagram illustrating the flow of an automatic water area segmentation method for the SAR image of a complex terrain according to an embodiment of the present disclosure;

Fig. 2 is a schematic diagram illustrating the structure of an automatic water area segmentation device for the SAR image of a complex terrain according to an embodiment of the present disclosure;

Fig. 3 is a schematic diagram showing three original SAR images according to an embodiment of the present disclosure;

Fig. 4 is a schematic diagram showing a first water area segmentation according to an embodiment of the present disclosure;

Fig. 5 is a schematic diagram illustrating an ROI extracted in an embodiment of the present disclosure;

Fig. 6 is a schematic diagram showing a second water area segmentation according to an embodiment of the present disclosure;

Fig. 7 is a schematic diagram showing the change in the water area range of a plurality of SAR images obtained in time sequence according to an embodiment of the present disclosure;

Fig. 8 is a diagram showing the change in the water/land boundary of a plurality of SAR images obtained in time sequence.

## DETAILED DESCRIPTION

To make the features and the technical content of the present disclosure understood better, the implementation of the present disclosure is set forth in combination with accompanying drawings, which are merely illustrative of, but is not to be construed as limiting the present disclosure.

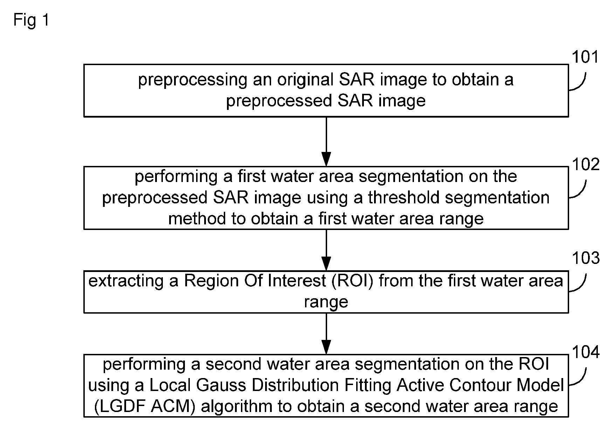

Fig. 1 is a schematic diagram illustrating the flow of an automatic water area segmentation method for the SAR image of a complex terrain according to an embodiment of the present disclosure, in this example, the automatic water area segmentation method for the SAR image of a complex terrain is applied in an automatic water area segmentation device for the SAR image of a complex terrain, and in a preferred embodiment of the present disclosure, the automatic water area segmentation method for the SAR image of a complex terrain includes the following steps.

Step 101: preprocessing an original SAR image to obtain a preprocessed SAR image.

Preferably, the step that an original SAR image is preprocessed to obtain a preprocessed SAR image includes:

the CP of the original SAR image and the CP of a reference SAR image are acquired using an automatic CP determination method;

the original SAR image is registered based on the CP of the original SAR image and the CP of the reference SAR image to obtain a registered SAR image;

the registered SAR image is filtered using enhanced Lee filtering algorithm to suppress speckle noises to obtain a filtered SAR image; and

pixels of the filtered SAR image are linearly stretched to obtain the preprocessed SAR image.

In this embodiment, a spaceborne or airborne SAR emits electromagnetic waves towards a target area, receives the echo signals fed back from the target area, and generates, according to the echo signals, the SAR image of the target area, which is the original SAR image.

In this embodiment, the automatic water area segmentation device for an SAR image preprocesses an original SAR image sent from a spaceborne or airborne SAR in receiving the original SAR image; specifically, as original SAR images obtained by the spaceborne or airborne SAR at different positions at different time in different environments are subjected to variations such as translation, rotation and distortion, it is needed to register the original SAR images; one of the plurality of original SAR image can be selected as a reference SAR image, any one of the original SAR images except the Reference SAR image may be registered based on the reference SAR image, that is, it is needed to transform each pixel in the original SAR images into a coordinate system accordant with a reference SAR image through a coordinate transformation, but before that, more than one CP is selected from the SAR images and the reference SAR image as a feature point for registration, wherein during the CP selection, a CP of the original SAR image and a CP of the reference SAR image are acquired using an automatic CP determination method, then the original SAR images are registered based on the CP of the original SAR image and the CP of the reference SAR image to obtain a registered SAR image. In this embodiment, the registered SAR image is further filtered using enhanced Lee filtering algorithm to suppress speckle noises to obtain a filtered SAR image. Finally, the filtered SAR image is linearly stretched, specifically, the weakest 1 % pixels in the filtered SAR image are set to be 0, and the highest 1 % pixels are set to be a preset maximum value, and the other pixels are linearly stretched in proportion, in this way, the contrast ratio of the water area and a background area is increased.

In the above technical solution, the automatic CP determination method may be implemented through but not limited to the following procedure: a detection template based on image variance is set; a detection criteria and a search strategy are preset; and a distorted CP corresponding to a reference CP is accurately positioned in the original SAR image using normalized product correlation algorithm for image matching.

In the above technical solution, an enhanced Lee filtering algorithm, which belongs to spatial domain algorithms, is an algorithm applying minimum mean square error, which is not described repeatedly here.

Step 102: performing a first water area segmentation on the preprocessed SAR image using a threshold segmentation method to obtain a first water area range.

Preferably, the step of performing a first water area segmentation on the preprocessed SAR image using a threshold segmentation method to obtain a first water area range may include:

dividing the preprocessed SAR image into N sub-images, wherein N is an integer greater than 1;

for each sub-image, selecting an optimal threshold in the sub-image using a classical Ostu algorithm and performing a first water area segmentation on the sub-image to obtain a first water area sub-range corresponding to the sub-image; and

splicing N first water area sub-ranges to obtain the first water area range.

In the above technical solution, Ostu algorithm is an automatic non-parameter unsupervised threshold selection algorithm which, based on a discriminant measurement criterion, obtains an optimal threshold when the measurement function is maximum, this algorithm is simple in calculation, only requiring the calculation of the zero-order and the first-order cumulant matrix of a gray level histogram..

In the above technical solution, the step that a first water area segmentation is performed on the sub-image based on the optimal threshold specifically includes: the sub-image is taken as the combination of two types of areas different in grayscale by means of the difference of the target and the background of the sub-image in the property of gray, and based on the optimal threshold, which one of the target area or the background area each pixel point in the sub-images belongs to is determined so as to obtain a corresponding first water area sub-range.

Step 103: extracting a Region Of Interest (ROI) from the first water area range.

Preferably, the step of extracting a Region Of Interest (ROI) from the first water area range may include:

the first water area range is processed using opening and closing operations in the morphology algorithm to decrease noises in the first water area range and isolate different connected water areas;

the water area having the largest connected area is selected in the first water area range resulted from the opening and closing operation, and the contrast ratio of the water area having the largest connected area is calculated based on the following formula:

$$C_{\max} = MAX\,(C_i = \frac{u_B - u_i}{\sigma_B}) \qquad (1)$$

Where $C_{\max}$ represents the contrast ratio of the water area having the largest connected area, $C_i$ represents the contrast ratio of the ith connected water area, $u_i$ represents the mean intensity value of the ith connected water area, $u_B$ and $\sigma_B$ represent the mean intensity value and the standard deviation value of a background, and $MAX(\,)$ represents an operation of choosing the maximum value;

an area threshold is determined based on the area of the water area having the largest connected area, and a contrast ratio range is determined based on the contrast ratio of the water area having the largest connected area; and

for each connected water area in the first water area range resulted from the opening and closing operations, determining a connected water area to be the ROI when the connected water area has an area greater than the area threshold and a contrast ratio within the contrast ratio range.

In the above technical solution, basic operations of the morphology algorithm consist of a corrosion operation and an expansion operation, and the opening and closing operation in the morphology algorithm refers to the combination of the corrosion operation and the expansion operation, for example, the closing operation means the expansion operation and a following corrosion operation, wherein the closing operation is the dual operation of the opening operation.

Step 104: performing a second water area segmentation on the ROI using a Local Gauss Distribution Fitting Active Contour Model (LGDF ACM) algorithm to obtain a second water area range.

Here, the LGDF ACM algorithm is mainly achieved through the following process:

(1) a level set function $\varnothing(x)$ is initialized to obtain the following formula (2):

$$\phi(x) = \begin{cases} -\rho_0, & x \in \Omega_0 - \partial\Omega_0 \\ 0, & x \in \partial\Omega_0 \\ \rho_0, & x \in \Omega - \Omega_0 \end{cases} \qquad (2)$$

Where $\rho_0$ is a constant, $\Omega_0$ is the obtained ROI, $\partial\Omega_0$ is the boundary of $\Omega_0$, and $\Omega$ is a connected area.

(2) a local mean $u_i(x)$ and a variance $\sigma_i^2(x)$ are updated to obtain updated functions, that is, the following formulas (3) and (4):

$$u_i(x) = \frac{\int \omega(y-x)I(y)M_{i,\varepsilon}(\phi(y))dy}{\int \omega(y-x)M_{i,\varepsilon}(\phi(y))dy} \qquad (3)$$

$$\sigma_i^2(x) = \frac{\int \omega(y-x)(u_i(x)-I(y))^2 M_{i,\varepsilon}(\phi(y))dy}{\int \omega(y-x)M_{i,\varepsilon}(\phi(y))dy} \qquad (4)$$

Where i is 1 or 2, $M_{1,\varepsilon}(\phi(y)) = H_\varepsilon(\phi(y))$, $M_{2,\varepsilon}(\phi(y)) = 1-H_\varepsilon(\phi(y))$, $\omega(y-x)$ is a windowed Gaussian Kernel Function, and $H$ is the Heaviside function which is defined as follows:

$$H_\varepsilon(x) = \frac{1}{2}\left[1+\frac{2}{\pi}\arctan(\frac{x}{\varepsilon})\right] \qquad (5)$$

Where $\varepsilon$ is an adjustable parameter.

(3) a horizontal plane evolved partial differential equation is as follows:

$$\frac{\partial \phi}{\partial t} = -\delta_\varepsilon(\phi)(e_1 - e_2) + v\delta_\varepsilon(\phi)\mathrm{div}\left(\frac{\nabla\phi}{|\nabla\phi|}\right) + u\left(\nabla^2\phi - \mathrm{div}\left(\frac{\nabla\phi}{|\nabla\phi|}\right)\right) \tag{6}$$

where

$$\delta_\varepsilon(\phi) = H'_\varepsilon(x) = \frac{1}{\pi}\frac{\varepsilon}{\varepsilon^2 + x^2} \tag{7}$$

$$e_i(x) = \int_\Omega \omega(y - x)\left[\log(\sigma_i(y)) + \frac{(u_i(y) - I(x))^2}{2\sigma_i^2(y)}\right]dy \qquad i = 1, 2, 3, \cdots \tag{8}$$

(4) whether or not the evolution is converged is determined, if so, the accurate ater/land boundary of a corresponding image can be obtained, otherwise, return to step (2) to perform the aforementioned operation circularly.

Preferably, the method may further include: a variation of the SAR images is calculated based on the second water area ranges of the plurality of SAR images in the time domain. Specifically, the plurality of accurate water/land boundaries extracted from the plurality of original SAR images obtained at different time, that is, the second water area ranges, are overlapped and compared with each other to obtain the area of the water area at different time and the change of the area with the time, in this way, the change in the area can be analyzed.

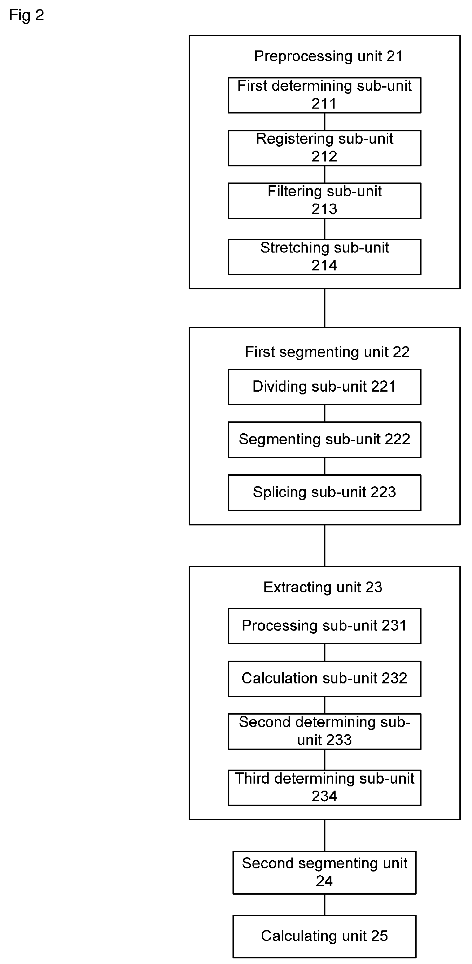

Fig. 2 is a schematic diagram illustrating the structure of an automatic water area segmentation device for the SAR image of a complex terrain according to an embodiment of the present disclosure, as shown in Fig. 2, the device includes:

a preprocessing unit 21 configured to preprocess an original SAR image to obtain a preprocessed SAR image;

a first segmenting unit 22 configured to perform a first water area segmentation operation on the preprocessed SAR image using a threshold segmentation method to obtain a first water area range;

an extracting unit 23 configured to extract an ROI from the first water area range; and

a second segmenting unit 24 configured to perform a second water area segmentation operation on the ROI using the LGDF ACM algorithm to obtain a second water area range.

Preferably, the preprocessing unit 21 may include:

a first determining sub-unit 211 configured to acquire the CP of the original SAR image and the CP of a reference SAR image using an automatic CP determination method;

a registering sub-unit 212 configured to register the original SAR image based on the CP of the original SAR image and the CP of the reference SAR image to obtain a registered SAR image;

a filtering sub-unit 213 configured to filter the registered SAR image using enhanced Lee filtering algorithm to suppress speckle noises to obtain a filtered SAR image; and

a stretching sub-unit 214 configured to linearly stretch pixels of the filtered SAR image to obtain the preprocessed SAR image.

Preferably, the first segmentation unit 22 may include:

a dividing sub-unit 221 configured to divide the preprocessed SAR image into N sub-images, wherein N is an integer greater than 1;

a segmenting sub-unit 222 configured to select, aiming at each sub-image, the optimal threshold in the sub-image using the classical Ostu algorithm and perform a first water area segmentation operation on the sub-image to obtain a first water area sub-range corresponding to the sub-image; and

a splicing sub-unit 223 configured to splice N first water area sub-ranges to obtain the first water area range.

Preferably, the extraction unit 23 may include:

a processing sub-unit 231 configured to process the first water area range using the opening and closing operation used in the morphology algorithm to decrease the noises in the first water area range and isolate different connected water areas;

a calculating sub-unit 232 configured to select the water area having the largest connected area in the first water area range resulted from the opening and closing operation, and calculate the contrast ratio of the water area having the largest connected area based on the following formula:

$$C_{max} = MAX(C_i = \frac{u_B - u_i}{\sigma_B})$$

Where $C_{max}$ represents the contrast ratio of the water area having the largest connected area, $C_i$ represents the contrast ratio of the ith connected water area, $u_i$ represents the mean intensity value of the ith connected water area, $u_B$ and $\sigma_B$ represent the mean intensity value and the standard deviation value of a background, and $MAX$ ( ) represents an operation of choosing the maximum value;

a second determining sub-unit 233 configured to determine an area threshold based on the area of the water area having the largest connected area, and determine a contrast ratio range based on the contrast ratio of the water area having the largest connected area; and

a third determining sub-unit 234 configured to determine, for each connected water area in the first water area range resulted from the opening and closing operations, a connected water area to be the ROI when the connected water area has an area greater than the area threshold and a contrast ratio within the contrast ratio range.

Preferably, the device may further include:

a calculating unit 25 configured to calculate the variation of the SAR image based on the second water area ranges of a plurality of SAR images in the time domain.

It should be appreciated by those skilled in this art that the functions achieved by each unit in the automatic water area segmentation device for the SAR image of a complex terrain shown in Fig. 2 can be understood by reference to related description in the aforementioned automatic water area segmentation method for the SAR image of a complex terrain. The functions of each unit in the automatic water area segmentation device for the SAR image of a complex terrain shown in Fig. 2 and the functions of the sub-units of the unit can be achieved by running programs on a processor or through a specific logic circuit.

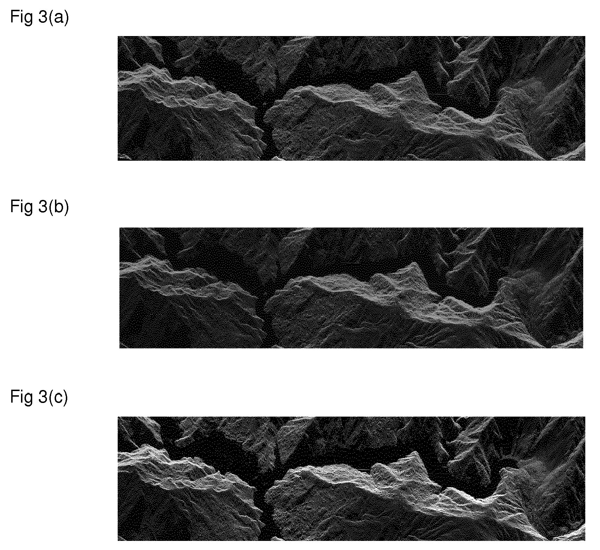

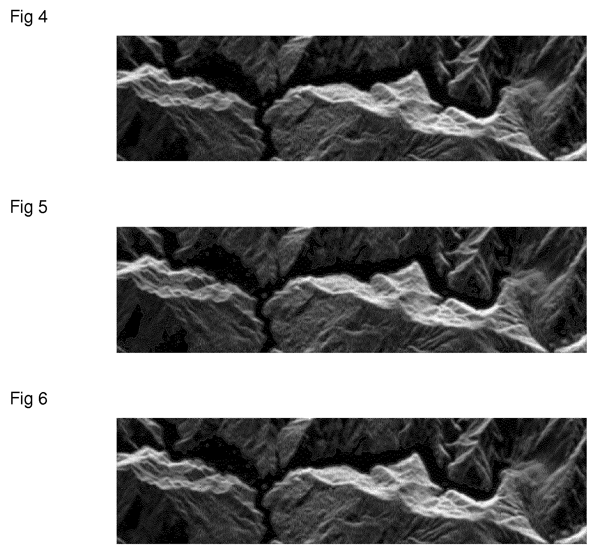

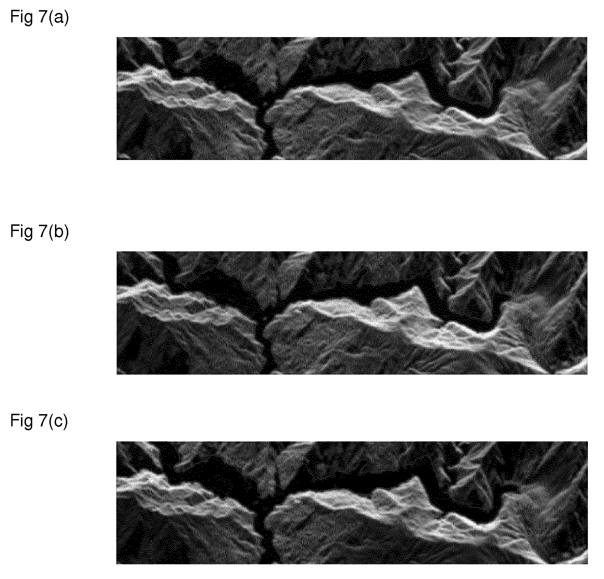

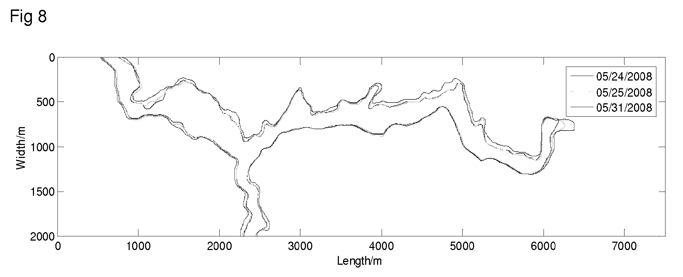

Fig. 3 shows original SAR images which are obtained in time sequence by a high-resolution airborne SAR from Tangjiashan Lake on May 24, 2008 (image (a)), May 25, 2008 (image (b)) and May 31, 2008 (image (c)) and the pixel size of which is 1 mx1 m (RangexAzimuth); Fig. 4 shows a preprocessed SAR image which is obtained after the original SAR images are preprocessed and which is corresponding to the image (b) shown in Fig. 3; Fig. 5 is a schematic diagram showing the result of a first segmentation water area segmentation on an SAR image, this segmented image corresponding to image (b) shown in Fig. 3; Fig. 6 shows an ROI which is extracted from an SAR image and which is corresponding to image (b) shown in Fig. 3; Fig. 7 is a schematic diagram showing the result of a second segmentation water area segmentation on the SAR images, this method finally obtains accurate water/land boundaries by removing similar water areas from the SAR images, the water/land boundaries of the SAR images (a), (b) and (c) are obtained on May 24, 2008, May 25, 2008 and May 31, 2008, respectively; Fig. 8 is a diagram showing the change in the water/land boundary in the plurality of SAR images obtained in time sequence, this diagram accurately shows the variation of the water area observed at three times. Based on the aforementioned obtained water/land boundary, Table 1 shows the result of a quantitative analysis on the area of the water area in a plurality of SAR images obtained in time sequence and the variation thereof, the result shows the area, the area increase and the rate of the area increase of the water area observed at each time and has a great practical significance to the danger evaluation and water level forecasting of Tangjiashan Lake.

Table 1

|  | Water area (Km$^2$) | Increased area (Km$^2$) | Rate of increase |
|---|---|---|---|
| 08-05-24 | 1.747565 | 0.000000 | 0.000000% |
| 08-05-25 | 1.790024 | 0.042459 | 2.429596% |
| 08-05-31 | 2.099901 | 0.352336 | 20.161527% |

The above disclosure only provides preferred embodiments of the present disclosure, and are not intend to limit the scope of the present discourse..

**Claims**

1.  An automatic water area segmentation method for a Synthetic Aperture Radar, SAR, image of a complex terrain, comprising:

    preprocessing (101) an original SAR image to obtain a preprocessed SAR image;
    performing (102) a first water area segmentation on the preprocessed SAR image using a threshold segmentation method to obtain a first water area range;
    extracting (103) a Region Of Interest, ROI, from the first water area range; and
    performing (104) a second water area segmentation on the ROI using a Local Gauss Distribution Fitting Active Contour Model, LGDF ACM, algorithm to obtain a second water area range,

    the step (102) of performing a first water area segmentation on the preprocessed SAR image using a threshold segmentation method to obtain a first water area range comprises:

    dividing the preprocessed SAR image into N sub-images, wherein N is an integer greater than 1;
    for each sub-image, selecting an optimal threshold in the sub-image using a classical Otsu algorithm and performing a first water area segmentation on the sub-image to obtain a first water area sub-range corresponding to the sub-image; and
    splicing N first water area sub-ranges to obtain the first water area range.

2.  The method according to claim 1, the step (101) of preprocessing an original SAR image to obtain a preprocessed SAR image comprises:

    acquiring a Control Point, CP, of the original SAR image and a CP of a reference SAR image using an automatic CP determination method;
    registering the original SAR image based on the CP of the original SAR image and the CP of the reference SAR image to obtain a registered SAR image;
    filtering the registered SAR image using an enhanced Lee filtering algorithm to suppress speckle noises to obtain a filtered SAR image; and
    linearly stretching pixels of the filtered SAR image to obtain the preprocessed SAR image.

3.  The method according to claim 1, the step (103) of extracting an ROI from the first water area range comprises:

    processing the first water area range using opening and closing operations in a morphology algorithm to decrease noises in the first water area range and isolate different connected water areas;
    selecting a water area having the largest connected area in the first water area range resulted from the opening and closing operations, and calculating a contrast ratio of the water area having the largest connected area based on the following formula:

$$C_{max} = MAX(C_i = \frac{u_B - u_i}{\sigma_B})$$

where $C_{max}$ represents the contrast ratio of the water area having the largest connected area, $C_i$ represents a contrast ratio of the ith connected water area, $u_i$ represents a mean intensity value of the ith connected water area, $u_B$ and $\sigma_B$ represent a mean intensity value and a standard deviation value of a background, and *MAX* ( ) represents an operation of choosing the maximum value;

determining an area threshold based on the area of the water area having the largest connected area, and determining a contrast ratio range based on the contrast ratio of the water area having the largest connected area; and

for each connected water area in the first water area range resulted from the opening and closing operations, determining a connected water area to be the ROI when the connected water area has an area greater than the area threshold and a contrast ratio within the contrast ratio range.

4. The method according to any one of claims 1 to 3, further comprising:

calculating a variation of the SAR image based on the second water area ranges of a plurality of SAR images in the time domain.

5. An automatic water area segmentation device for a Synthetic Aperture Radar, SAR, image of a complex terrain, comprising:

a preprocessing unit (21) configured to preprocess an original SAR image to obtain a preprocessed SAR image;
a first segmenting unit (22) configured to perform a first water area segmentation on the preprocessed SAR image using a threshold segmentation method to obtain a first water area range;
an extracting unit (23) configured to extract a Region Of Interest, ROI, in the first water area range; and
a second segmenting unit (24) configured to perform a second water area segmentation on the ROI using a Local Gauss Distribution Fitting Active Contour Model, LGDF ACM, algorithm to obtain a second water area range,

wherein the first segmentation unit (22) comprises:

a dividing sub-unit (221) configured to divide the preprocessed SAR image into N sub-images, wherein N is an integer greater than 1;
a segmenting sub-unit (222) configured to select, for each sub-image, an optimal threshold in the sub-image using a classical Otsu algorithm, and perform a first water area segmentation on the sub-image to obtain a first water area sub-range corresponding to the sub-image; and
a splicing sub-unit (223) configured to splice N first water area sub-ranges to obtain the first water area range.

6. The device according to claim 5, wherein the preprocessing unit (21) comprises:

a first determining sub-unit (211) configured to acquire a Control Point, CP, of the original SAR image and a CP of a reference SAR image using an automatic CP determination method;
a registering sub-unit (212) configured to register the original SAR image based on the CP of the original SAR image and the CP of the reference SAR image to obtain a registered SAR image;
a filtering sub-unit (213) configured to filter the registered SAR image using an enhanced Lee filtering algorithm to suppress speckle noises to obtain a filtered SAR image; and
a stretching sub-unit (214) configured to linearly stretch pixels of the filtered SAR image to obtain the preprocessed SAR image.

7. The device according to claim 5, wherein the extracting unit (23) comprises:

a processing sub-unit (231) configured to process the first water area range using opening and closing operations in a morphology algorithm to decrease noises in the first water area range and isolate different connected water areas;
a calculating sub-unit (232) configured to select a water area having the largest connected area in the first water area range resulted from the opening and closing operations, and calculate a contrast ratio of the water area having the largest connected area based on the following formula:

$$C_{\max} = MAX\,(C_i = \frac{u_B - u_i}{\sigma_B}$$

where $C_{\max}$ represents the contrast ratio of the water area having the largest connected area, $C_i$ represents a contrast ratio of the ith connected water area, $u_i$ represents a mean intensity value of the ith connected water area, $u_B$ and $\sigma_B$ represent a mean intensity value and a standard deviation value of a background, and *MAX* ( ) represents an operation of choosing the maximum value;

a second determining sub-unit (233) configured to determine an area threshold based on the area of the water area having the largest connected area and determine a contrast ratio range based on the contrast ratio of the water area having the largest connected area; and

a third determining sub-unit (234) configured to determine, for each connected water area in the first water area range resulted from the opening and closing operations, a connected water area to be the ROI when the connected water area has an area greater than the area threshold and a contrast ratio within the contrast ratio range.

8. The device according to any one of claims 5-7, further comprising:

a calculating unit (25) configured to calculate a variation of the SAR image based on the second water area ranges of a plurality of SAR images in the time domain.

**Patentansprüche**

1. Automatisches Wasserflächen-Segmentierungsverfahren für ein SAR-(Radar mit synthetischer Öffnung)-Bild eines komplexen Geländes, umfassend:

Vorverarbeitung (101) eines originalen SAR-Bildes, um ein vorverarbeitetes SAR-Bild zu erhalten; Ausführen (102) einer ersten Wasserflächensegmentierung an dem vorverarbeiteten SAR-Bild unter Verwendung eines Schwellwertsegmentierungsverfahrens, um einen ersten Wasserflächenbereich zu erhalten;
Extrahieren (103) eines Interessierenden Bereichs, ROI, aus dem ersten Wasserflächenbereich; und
Durchführen (104) einer zweiten Wasserflächensegmentierung am ROI unter Verwendung eines Algorithmus für ein Lokales Gaußsches Verteilungsanpassungs-Aktivkonturmodell, LGDF ACM, um einen zweiten Wasserflächenbereich zu erhalten,
wobei der Schritt (102) des Ausführens einer ersten Wasserflächensegmentierung am vorverarbeiteten SAR-Bild, der ein Schwellwertsegmentierungsverfahren verwendet, um einen ersten Wasserflächenbereich zu erhalten, Folgendes umfasst:

Teilen des vorverarbeiteten SAR-Bildes in N Teilbilder, wobei N eine ganze Zahl größer als 1 ist;
für jedes Teilbild, Auswählen eines optimalen Schwellwertes im Teilbild unter Verwendung eines klassischen Algorithmus und Ausführen einer ersten Wasserflächenbereichssegmentierung am Teilbild, um einen ersten Wasserflächenteilbereich zu erhalten, der dem Teilbild entspricht; und Zusammenfügen von N ersten Wasserflächenteilbereichen, um den ersten Wasserflächenbereich zu erhalten.

2. Verfahren nach Anspruch 1, wobei der Schritt (101) der Vorverarbeitung eines originalen SAR-Bildes, um ein vorverarbeitetes SAR-Bild zu erhalten, Folgendes umfasst:

Akquirieren eines Kontrollpunktes, CP, des originalen SAR-Bildes und eines CP eines Referenz-SAR-Bildes unter Verwendung eines automatischen CP-Bestimmungsverfahrens;
Registrieren des originalen SAR-Bildes auf der Basis des CP des originalen SAR-Bildes und des CP des Referenz-SAR-Bildes, um ein registriertes SAR-Bild zu erhalten;
Filtern des registrierten SAR-Bildes unter Verwendung eines erweiterten Lee-Filteralgorithmus, um Fleckenrauschen zu unterdrücken, um ein gefiltertes SAR-Bild zu erhalten; und
lineares Strecken von Pixeln des gefilterten SAR-Bildes, um das vorverarbeitete SAR-Bild zu erhalten.

3. Verfahren nach Anspruch 1, wobei der Schritt (103) des Extrahierens eines ROI aus dem ersten Wasserflächenbereich umfasst:

Verarbeiten des ersten Wasserflächenbereichs unter Verwendung von Öffnungs- und Schließoperationen in einem Morphologiealgorithmus, um Rauschen im ersten Wasserflächenbereich zu verringern und verschiedene zusammenhängende Wasserflächen zu isolieren;

Auswählen einer Wasserfläche, die die größte zusammenhängende Fläche im ersten Wasserflächenbereich hat, die sich aus den Öffnungs- und Schließoperationen ergibt, und Berechnen eines Kontrastverhältnisses der Wasserfläche, die die größte zusammenhängende Fläche hat, auf der Basis der folgenden Formel:

$$C_{max} = MAX(C_i = \frac{u_B - u_i}{\sigma_B})$$

wobei $C_{max}$ das Kontrastverhältnis der Wasserfläche ist, die die größte zusammenhängende Fläche hat, $C_i$ ein Kontrastverhältnis der i-ten zusammenhängenden Wasserfläche darstellt, $u_i$ einen mittleren Intensitätswert der i-ten zusammenhängenden Wasserfläche darstellt, $u_B$ und $\sigma_B$ einen mittleren Intensitätswert und eine Standardabweichung eines Hintergrundes darstellen, und MAX ( ) eine Operation des Wählens des Maximalwertes darstellt;

Bestimmen eines Flächenschwellwertes auf der Basis der Fläche der Wasserfläche, die die größte zusammenhängende Fläche hat, und Bestimmen eines Kontrastverhältnisbereichs auf der Basis des Kontrastverhältnisses der Wasserfläche, die die größte zusammenhängende Fläche hat; und

für jede zusammenhängende Wasserfläche im ersten Wasserflächenbereich, die sich aus den Öffnungs- und Schließoperationen ergibt, Bestimmen einer zusammenhängenden Wasserfläche, die der ROI sein soll, wenn die zusammenhängende Wasserfläche eine größere Fläche als der Flächenschwellwert und ein Kontrastverhältnis innerhalb des Kontrastverhältnisbereichs hat.

4. Verfahren nach einem der Ansprüche 1 bis 3, ferner umfassend:

Berechnen einer Variation des SAR-Bildes auf der Basis der zweiten Wasserflächenbereiche von mehreren SAR-Bildern in der Zeitdomäne.

5. Automatische Wasserflächen-Segmentierungsvorrichtung für ein SAR-(Radar mit synthetischer Öffnung)-Bild eines komplexen Geländes, umfassend:

eine Vorverarbeitungseinheit (21), die dafür ausgelegt ist, ein originales SAR-Bild vorzuverarbeiten, um ein vorverarbeitetes SAR-Bild zu erhalten;

eine erste Segmentierungseinheit (22), die dafür ausgelegt ist, eine erste Wasserflächensegmentierung am vorverarbeiteten SAR-Bild unter Verwendung eines Schwellwertsegmentierungsverfahrens auszuführen, um einen ersten Wasserflächenbereich zu erhalten;

eine Extraktionseinheit (23), die dafür ausgelegt ist, einen Interessierenden Bereich, ROI, im ersten Wasserflächenbereich zu extrahieren; und

eine zweite Segmentierungseinheit (24), die dafür ausgelegt ist, eine zweite Wasserflächensegmentierung am ROI unter Verwendung eines Algorithmus für ein Lokales Gaußsches Verteilungsanpassungs-Aktivkonturmodell, LGDF ACM, auszuführen, um einen zweiten Wasserflächenbereich zu erhalten,

wobei die erste Segmentierungseinheit (22) umfasst:

eine Teilungsuntereinheit (221), die dafür ausgelegt ist, das vorverarbeitete SAR-Bild in N Teilbilder zu teilen, wobei N eine ganze Zahl größer als 1 ist;

eine Segmentierungsuntereinheit (222), die dafür ausgelegt ist, für jedes Teilbild einen optimalen Schwellwert im Teilbild unter Verwendung eines klassischen Otsu-Algorithmus zu wählen, und eine erste Wasserflächensegmentierung am Teilbild auszuführen, um einen ersten Wasserflächenteilbereich zu erhalten, der dem Teilbild entspricht; und

eine Zusammenfügungsuntereinheit (223), die dafür ausgelegt ist, N erste Wasserflächenteilbereiche zusammenzufügen, um den ersten Wasserflächenbereich zu erhalten.

6. Vorrichtung nach Anspruch 5, wobei die Vorverarbeitungseinheit (21) umfasst:

eine erste Bestimmungsuntereinheit (211), die dafür ausgelegt ist, einen Kontrollpunkt, CP, des originalen SAR-Bildes und einen CP eines Referenz-SAR-Bildes unter Verwendung eines automatischen CP-Bestimmungsverfahrens zu akquirieren;

eine registrierende Untereinheit (212), die dafür ausgelegt ist, das originale SAR-Bild auf der Basis des CP des originalen SAR-Bildes und des CP des Referenz-SAR-Bildes zu registrieren, um ein registriertes SAR-Bild zu erhalten;

eine Filteruntereinheit (213), die dafür ausgelegt ist, das registrierte SAR-Bild unter Verwendung eines erweiterten Lee-Filteralgorithmus zu filtern, um Fleckenrauschen zu unterdrücken, um ein gefiltertes SAR-Bild zu erhalten; und

eine Streckuntereinheit (214), die dafür ausgelegt ist, Pixel des gefilterten SAR-Bildes linear zu strecken, um das vorverarbeitete SAR-Bild zu erhalten.

7. Vorrichtung nach Anspruch 5, wobei die Extraktionseinheit (23) umfasst:

eine Verarbeitungsuntereinheit (231), die dafür ausgelegt ist, den ersten Wasserflächenbereich unter Verwendung von Öffnungs- und Schließoperationen in einem Morphologiealgorithmus zu verarbeiten, um Rauschen im ersten Wasserflächenbereich zu verringern und verschiedene zusammenhängende Wasserflächen zu isolieren;

eine Berechnungsuntereinheit (232), die dafür ausgelegt ist, eine Wasserfläche, die die größte zusammenhängende Fläche im ersten Wasserflächenbereich hat, die sich aus den Öffnungs- und Schließoperationen ergibt, auszuwählen und ein Kontrastverhältnis der Wasserfläche, die die größte zusammenhängende Fläche hat, auf der Basis der folgenden Formel zu berechnen:

$$C_{max} = MAX(C_i = \frac{u_B - u_i}{\sigma_B})$$

wobei $C_{max}$ das Kontrastverhältnis der Wasserfläche darstellt, die die größte zusammenhängende Fläche hat, $C_i$ ein Kontrastverhältnis der i-ten zusammenhängenden Wasserfläche darstellt, $u_i$ einen mittleren Intensitätswert der i-ten zusammenhängenden Wasserfläche darstellt, $u_B$ und $\sigma B$ einen mittleren Intensitätswert und eine Standardabweichung eines Hintergrundes darstellen, und MAX ( ) eine Operation des Wählens des Maximalwertes darstellt;

eine zweite Bestimmungsuntereinheit (233), die dafür ausgelegt ist, einen Flächenschwellwert auf der Basis der Fläche der Wasserfläche, die die größte zusammenhängende Fläche hat, zu bestimmen, und einen Kontrastverhältnisbereich auf der Basis des Kontrastverhältnisses der Wasserfläche, die die größte zusammenhängende Fläche hat, zu bestimmen; und

eine dritte Bestimmungsuntereinheit (234), die dafür ausgelegt ist, für jede zusammenhängende Wasserfläche im ersten Wasserflächenbereich, die sich aus den Öffnungs- und Schließoperationen ergibt, eine zusammenhängende Wasserfläche zu bestimmen, die der ROI sein soll, wenn die zusammenhängende Wasserfläche eine größere Fläche als der Flächenschwellwert und ein Kontrastverhältnis innerhalb des Kontrastverhältnisbereichs hat.

8. Anzeigevorrichtung nach einem der Ansprüche 5 bis 7, die ferner Folgendes umfasst:

eine Berechnungseinheit (25), die dafür ausgelegt ist, eine Variation des SAR-Bildes auf der Basis der zweiten Wasserflächenbereiche von mehreren SAR-Bildern in der Zeitdomäne zu berechnen.

**Revendications**

1. Procédé de segmentation automatique des zones d'eau dans une image de radar à synthèse d'ouverture, SAR (Synthetic Aperture Radar), d'un terrain complexe, comprenant :

le prétraitement (101) d'une image SAR initiale afin d'obtenir une image SAR prétraitée ;

la réalisation (102) d'une première segmentation des zones d'eau sur l'image SAR prétraitée au moyen d'un procédé de segmentation par seuillage afin d'obtenir une première gamme de zones d'eau ;

l'extraction (103) d'une région d'intérêt, ROI (Region Of Interest), à partir de la première gamme de zones d'eau ; et

la réalisation (104) d'une seconde segmentation des zones d'eau sur la ROI au moyen d'un algorithme de modèle de contour actif à ajustement local de distribution normale, LGDF ACM (Local Gauss Distribution Fitting Active Contour Model), afin d'obtenir une seconde gamme de zones d'eau ;

**caractérisé par** l'étape (102) de réalisation d'une première segmentation des zones d'eau sur l'image SAR prétraitée au moyen d'un procédé de segmentation par seuillage afin d'obtenir une première gamme de zones d'eau comprenant :

la subdivision de l'image SAR prétraitée en N sous-images, dans lequel N est un entier supérieur à 1 ;
pour chaque sous-image, la sélection d'un seuil optimal dans la sous-image au moyen d'un algorithme Otsu classique et la réalisation d'une première segmentation des zones d'eau sur la sous-image afin d'obtenir une première sous-gamme de zones d'eau correspondant à la sous-image ; et
l'épissage des N premières sous-gammes de zones d'eau afin d'obtenir la première gamme de zones d'eau.

2. Procédé selon la revendication 1, l'étape (101) de prétraitement d'une image SAR initiale afin d'obtenir une image SAR prétraitée comprenant :

l'acquisition d'un point de contrôle, PC, de l'image SAR initiale et un PC d'une image SAR de référence au moyen d'un procédé de détermination de PC automatique ;
le repérage de l'image SAR initiale en fonction du PC de l'image SAR initiale et du PC de l'image SAR de référence afin d'obtenir une image SAR repérée ;
le filtrage de l'image SAR repérée au moyen d'un algorithme de filtrage Lee amélioré pour supprimer le bruit de chatoiement en vue d'obtenir une image SAR filtrée ; et
l'étirement linéaire des pixels de l'image SAR filtrée afin d'obtenir l'image SAR prétraitée.

3. Procédé selon la revendication 1, l'étape (103) d'extraction d'une ROI à partir de la première gamme de zones d'eau comprenant :

le traitement de la première gamme de zones d'eau au moyen d'opérations d'ouverture et de fermeture dans un algorithme de morphologie afin de réduire le bruit dans la première gamme de zones d'eau et d'isoler différentes zones d'eau connexes ;
la sélection d'une zone d'eau ayant la plus grande zone connexe dans la première gamme de zones d'eau résultant des opérations d'ouverture et de fermeture,
et le calcul d'un rapport de contraste de la zone d'eau ayant la plus grande zone connexe en se basant sur la formule suivante :

$$C_{max} = MAX(C_i = \frac{u_B - u_i}{\sigma_B})$$

où $C_{max}$ représente le rapport de contraste de la zone d'eau ayant la plus grande zone connexe, $C_i$ représente un rapport de contraste de la ième zone d'eau connexe, $u_i$ représente une valeur d'intensité moyenne de la ième zone d'eau connexe, $u_B$ et $\sigma_B$ représentent une valeur d'intensité moyenne et une valeur d'écart type d'un arrière-plan, et *MAX ( )* représente une opération de sélection de la valeur maximale ;
la détermination d'un seuil de superficie en fonction de la superficie de la zone d'eau ayant la plus grande zone connexe, et la détermination d'une plage de rapports de contraste en fonction du rapport de contraste de la zone d'eau ayant la plus grande zone connexe ; et
pour chaque zone d'eau connexe de la première gamme de zones d'eau résultant des opérations d'ouverture et de fermeture, la détermination d'une zone d'eau connexe qui sera la ROI lorsque la zone d'eau connexe présente une superficie supérieure au seuil de superficie ainsi qu'un rapport de contraste compris dans la plage de rapports de contraste.

4. Procédé selon l'une quelconque des revendications 1 à 3, comprenant en outre :

le calcul d'une variation de l'image SAR en fonction des secondes gammes de zones d'eau d'une pluralité d'images SAR dans le domaine temporel.

5. Dispositif de segmentation automatique des zones d'eau dans une image de radar à synthèse d'ouverture, SAR (Synthetic Aperture Radar), d'un terrain complexe, comprenant :

une unité de prétraitement (21) configurée pour le prétraitement d'une image SAR initiale afin d'obtenir une image SAR prétraitée ;

une première unité de segmentation (22) configurée pour réaliser une première segmentation des zones d'eau sur l'image SAR prétraitée au moyen d'un procédé de segmentation par seuillage afin d'obtenir une première gamme de zones d'eau ;

une unité d'extraction (23) configurée pour extraire une région d'intérêt, ROI (Region Of Interest), à partir de la première gamme de zones d'eau ; et

une seconde unité de segmentation (24) configurée pour réaliser une seconde segmentation des zones d'eau sur la ROI au moyen d'un algorithme de modèle de contour actif à ajustement local de distribution normale, LGDF ACM (Local Gauss Distribution Fitting Active Contour Model), afin d'obtenir une seconde gamme de zones d'eau,

dans lequel la première unité de segmentation (22) comprend :

une sous-unité de subdivision (221) configurée pour subdiviser l'image SAR prétraitée en N sous-images, dans lequel N est un entier supérieur à 1 ;

une sous-unité de segmentation (222) configurée pour sélectionner, pour chaque sous-image, un seuil optimal dans la sous-image au moyen d'un algorithme Otsu classique et réaliser une première segmentation des zones d'eau sur la sous-image afin d'obtenir une première sous-gamme de zones d'eau correspondant à la sous-image ; et

une sous-unité d'épissage (223) configurée pour épisser les N premières sous-gammes de zones d'eau afin d'obtenir la première gamme de zones d'eau.

6. Dispositif selon la revendication 5, dans lequel l'unité de prétraitement (21) comprend :

une première sous-unité de détermination (211) configurée pour réaliser l'acquisition d'un point de contrôle, PC, de l'image SAR initiale et d'un PC d'une image SAR de référence au moyen d'un procédé de détermination de PC automatique ;

une sous-unité de repérage (212) configurée pour repérer l'image SAR initiale en fonction du PC de l'image SAR initiale et du PC de l'image SAR de référence afin d'obtenir une image SAR repérée ;

une sous-unité de filtrage (213) configurée pour filtrer l'image SAR repérée au moyen d'un algorithme de filtrage Lee amélioré pour supprimer le bruit de chatoiement en vue d'obtenir une image SAR filtrée ; et

une sous-unité d'étirement (214) configurée pour étirer de façon linéaire les pixels de l'image SAR filtrée afin d'obtenir l'image SAR prétraitée.

7. Dispositif selon la revendication 5, dans lequel l'unité d'extraction (23) comprend :

une sous-unité de traitement (231) configurée pour traiter la première gamme de zones d'eau au moyen d'opérations d'ouverture et de fermeture dans un algorithme de morphologie afin de réduire le bruit dans la première gamme de zones d'eau et d'isoler différentes zones d'eau connexes ;

une sous-unité de calcul (232) configurée pour sélectionner une zone d'eau ayant la plus grande zone connexe dans la première gamme de zones d'eau résultant des opérations d'ouverture et de fermeture et calculer un rapport de contraste de la zone d'eau ayant la plus grande zone connexe en se basant sur la formule suivante :

$$C_{\max} = MAX\left(C_i = \frac{u_B - u_i}{\sigma_B}\right)$$

où $C_{\max}$ représente le rapport de contraste de la zone d'eau ayant la plus grande zone connexe, $C_i$ représente un rapport de contraste de la ième zone d'eau connexe, $u_i$ représente une valeur d'intensité moyenne de la ième zone d'eau connexe, $u_B$ et $\sigma_B$ représentent une valeur d'intensité moyenne et une valeur d'écart type d'un arrière-plan, et $MAX$ ( ) représente une opération de sélection de la valeur maximale ;

une deuxième sous-unité de détermination (233) configurée pour déterminer un seuil de superficie en se basant sur la superficie de la zone d'eau ayant la plus grande zone connexe et déterminer une plage de rapports de contraste en se basant sur le rapport de contraste de la zone d'eau ayant la plus grande zone connexe ; et

une troisième sous-unité de détermination (234) configurée pour déterminer, pour chaque zone d'eau connexe de la première gamme de zones d'eau résultant des opérations d'ouverture et de fermeture, une zone d'eau connexe qui sera la ROI lorsque la zone d'eau connexe présente une superficie supérieure au seuil de superficie ainsi qu'un rapport de contraste compris dans la plage de rapports de contraste.

8. Dispositif selon l'une quelconque des revendications 5 à 7, comprenant en outre :

une unité de calcul (25) configurée pour calculer une variation de l'image SAR en se basant sur les secondes gammes de zones d'eau d'une pluralité d'images SAR dans le domaine temporel.

Fig 1

preprocessing an original SAR image to obtain a
preprocessed SAR image
101

performing a first water area segmentation on the
preprocessed SAR image using a threshold segmentation
method to obtain a first water area range
102

extracting a Region Of Interest (ROI) from the first water area
range
103

performing a second water area segmentation on the ROI
using a Local Gauss Distribution Fitting Active Contour Model
(LGDF ACM) algorithm to obtain a second water area range
104

Fig 2

```
┌─────────────────────────────────────┐
│         Preprocessing unit 21        │
│   ┌───────────────────────────────┐  │
│   │  First determining sub-unit   │  │
│   │              211              │  │
│   ├───────────────────────────────┤  │
│   │      Registering sub-unit     │  │
│   │              212              │  │
│   ├───────────────────────────────┤  │
│   │       Filtering sub-unit      │  │
│   │              213              │  │
│   ├───────────────────────────────┤  │
│   │      Stretching sub-unit      │  │
│   │              214              │  │
│   └───────────────────────────────┘  │
└─────────────────────────────────────┘

┌─────────────────────────────────────┐
│        First segmenting unit 22      │
│   ┌───────────────────────────────┐  │
│   │      Dividing sub-unit 221     │  │
│   ├───────────────────────────────┤  │
│   │    Segmenting sub-unit 222     │  │
│   ├───────────────────────────────┤  │
│   │     Splicing sub-unit 223      │  │
│   └───────────────────────────────┘  │
└─────────────────────────────────────┘

┌─────────────────────────────────────┐
│            Extracting unit 23        │
│   ┌───────────────────────────────┐  │
│   │    Processing sub-unit 231     │  │
│   ├───────────────────────────────┤  │
│   │    Calculation sub-unit 232    │  │
│   ├───────────────────────────────┤  │
│   │    Second determining sub-     │  │
│   │            unit 233            │  │
│   ├───────────────────────────────┤  │
│   │   Third determining sub-unit   │  │
│   │              234              │  │
│   └───────────────────────────────┘  │
└─────────────────────────────────────┘

┌───────────────────────────────┐
│    Second segmenting unit      │
│              24               │
└───────────────────────────────┘

┌───────────────────────────────┐
│       Calculating unit 25      │
└───────────────────────────────┘
```

Fig 3(a)

Fig 3(b)

Fig 3(c)

Fig 4

Fig 5

Fig 6

Fig 7(a)

Fig 7(b)

Fig 7(c)

Fig 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Topography and morphodynamics in the German Bight using SAR and optical remote sensing data. **ANDREAS NIEDERMEIER.** Ocean Dynamics; Theoretical, Computational and Observational Oceanography. Springer, November 2005, vol. 55

- Active contours driven by local Gaussian distribution fitting energy. **WANG L.** Signal Processing. Elsevier Science Publishers B. V. Amsterdam, December 2009, vol. 89